Europäisches Patentamt

European Patent Office

Office européen des brevets

(19)

(11) **EP 1 212 526 B1**

(12) **EUROPÄISCHE PATENTSCHRIFT**

(45) Veröffentlichungstag und Bekanntmachung des Hinweises auf die Patenterteilung:
**19.10.2005 Patentblatt 2005/42**

(21) Anmeldenummer: **00956347.9**

(22) Anmeldetag: **28.07.2000**

(51) Int Cl.⁷: **F02D 21/08**

(86) Internationale Anmeldenummer:
**PCT/EP2000/007334**

(87) Internationale Veröffentlichungsnummer:
**WO 2001/016475 (08.03.2001 Gazette 2001/10)**

(54) **VERFAHREN UND VORRICHTUNG ZUM REGELN DER ABGASRÜCKFÜHRUNG EINER BRENNKRAFTMASCHINE**

METHOD AND DEVICE FOR REGULATING THE EXHAUST GAS RECIRCULATION OF AN INTERNAL COMBUSTION ENGINE

PROCEDE ET DISPOSITIF PERMETTANT DE REGLER LE RECYCLAGE DES GAZ D'ECHAPPEMENT D'UN MOTEUR A COMBUSTION INTERNE

(84) Benannte Vertragsstaaten:
**DE ES FR GB IT**

(30) Priorität: **28.08.1999 DE 19941007**

(43) Veröffentlichungstag der Anmeldung:
**12.06.2002 Patentblatt 2002/24**

(73) Patentinhaber: **Volkswagen Aktiengesellschaft 38436 Wolfsburg (DE)**

(72) Erfinder:
• **NITZKE, Hans-Georg**
**38547 Wettmershagen (DE)**

• **REBOHL, Thorsten**
**38100 Braunschweig (DE)**

(56) Entgegenhaltungen:
EP-A- 0 892 164      US-A- 4 289 108
US-A- 5 377 651

• **PATENT ABSTRACTS OF JAPAN vol. 015, no. 035 (M-1074), 28. Januar 1991 (1991-01-28) & JP 02 275055 A (MAZDA MOTOR CORP), 9. November 1990 (1990-11-09)**
• **PATENT ABSTRACTS OF JAPAN vol. 008, no. 083 (M-290), 17. April 1984 (1984-04-17) & JP 59 000561 A (TOYOTA JIDOSHA KOGYO KK), 5. Januar 1984 (1984-01-05)**

EP 1 212 526 B1

**Beschreibung**

Die Erfindung betrifft ein Verfahren und eine Vorrichtung zum Regeln der Abgasrückführung einer Brennkraftmaschine. Die Regelung der Abgasrückführung erfolgt bei heute serienmäßig gebauten Kraftfahrzeugen durch Vergleich zwischen einer in einem Speicherelement einer Steuervorrichtung abgelegten, vom Motorbetriebspunkt abhängigen Frischluftsollmasse mit der vom Motor tatsächlich angesaugten Luftmasse. Letztere wird von einem sogenannten Heißfilm-Luftmassenmesser im Ansaugtrakt des Motors gemessen. Über ein Abgasrückführventil erfolgt die teilweise Rückführung der vom Motor emittierten Abgase in den Ansaugtrakt.

Bei gegebenem Betriebspunkt des Motors vermindert sich der vom Motor benötigte Frischluftmassenanteil, wenn der zurückgeführte Abgasanteil erhöht wird. Dadurch ist es möglich, die eigentliche Zielgröße, die Abgasrückführrate, indirekt dadurch zu regeln, daß die von dem Luftmassenmesser im Ansaugtrakt gemessene Ansaugluftmasse mit einer für den jeweiligen Betriebspunkt des Motors erwarteten Frischluftmasse verglichen wird und gegengeregelt wird, wenn Abweichungen erfaßt werden.

Die Erfindung geht aus von der US 5.377.651 A, in welcher ein Verbrennungsmotor mit einem geschlossenen Regelkreis für die Regelung der Abgasrückführung offenbart ist, wobei ein Sollwert für die Frischluft mit einem aktuellen Istwert verglichen wird und die Abweichung als Eingangsgröße eines Regelkreises für die Abgasrückführung eingesetzt wird.

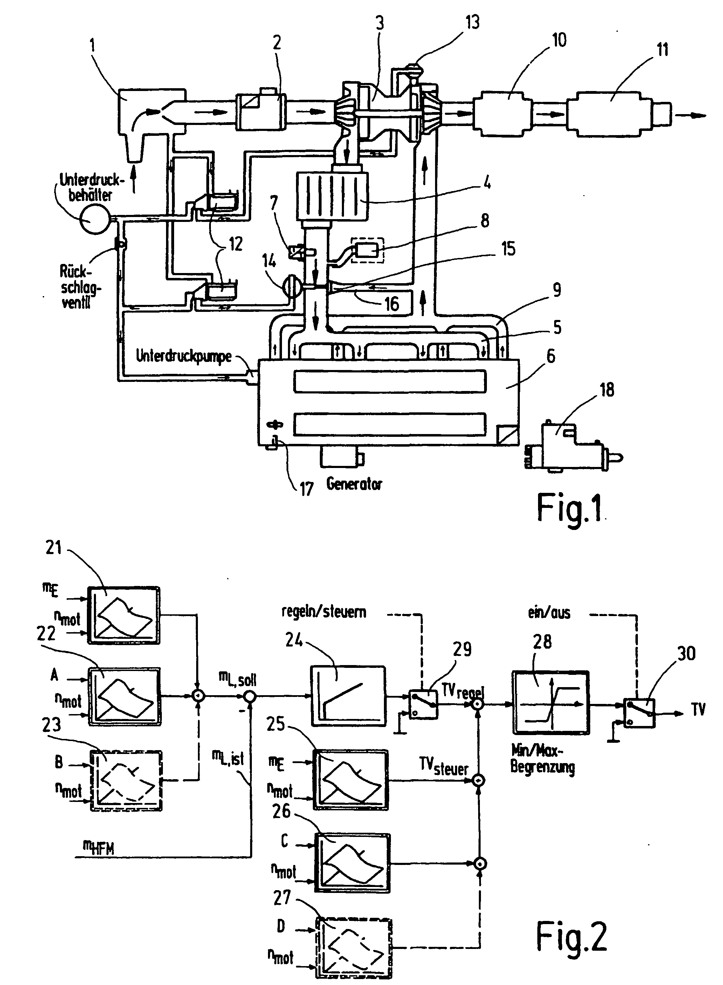

Figur 1 zeigt den schematischen Aufbau von Ansaug- und Abgastrakt eines Motors am Beispiel eines Turbo-Dieselmotors mit Kraftstoffeinspritzung. Durch einen Luftfilterkasten 1 hindurch angesaugte Frischluft strömt an einem Heißfilm-Luftmassenmesser (HFM) 2 vorbei in einen Turbolader 3 mit verstellbaren Turbinenleitschaufeln (VTG). Von dort aus durchströmt sie in komprimiertem Zustand einen Ladeluftkühler 4, von wo aus sie über ein Saugrohr 5 an die einzelnen Zylinder des Motors 6 verteilt wird. Am Saugrohr 5 sind ein Lufttemperaturfühler 7 und ein Ladedruckfühler 8 angeschlossen. Ein Abgaskrümmer 9 führt Abgas vom Motor 6 auf die Turbine des Turboladers 3. In der Turbine entspanntes Abgas wird über einen Oxidationskatalysator 10 und einen Schalldämpfer 11 ausgestoßen.

Zwei elektropneumatische Wandler 12 steuern Unterdruckdosen 13, 14 an, von denen eine 13 die Stellung der Turbinenleitschaufeln im Turbolader 3 und die andere 14 den Öffnungsgrad eines Abgasrückführventils 15 in einer Abgasrückführleitung 16 zwischen Abgaskrümmer 9 und Saugrohr 5 steuert. Ein Drehzahlgeber 17 ist am Motor 6 angeordnet.

Ein in Figur 1 nicht dargestelltes Steuergerät steuert mit Hilfe des Wandlers 12 und der Unterdruckdose 14 den Abgasrückfluß in der Leitung 16. Ein herkömmliches Regelverfahren einer solchen Vorrichtung zeigt Figur 2. Regelgröße ist die von dem Heißfilm-Luftmassenmesser 2 gemessene Frischluftmasse. Über ein von der Motordrehzahl $n_{Mot}$ und der Kraftstoffeinspritzmasse $m_E$ abhängiges Kennfeld 21 und über ggf. einige Zusatzkennfelder 22, 23 zur Anpassung an die Umweltbedingungen, dargestellt durch Eingangsgrößen A, B der Kennfelder 22, 23, erzeugt das Steuergerät einen Sollwert $m_{L,soll}$ für die Frischluftzufuhrmasse. Dieser Sollwert wird mit dem vom Luftmassenmesser 2 gelieferten Istwert $m_{L,ist}$ verglichen, und mit der Differenz der beiden Werte wird ein Proportional-Integral-Regler (PI-Regler) 24 angesteuert. Je nach Regelabweichung $m_{L,soll} - m_{L,ist}$ gibt der PI-Regler 24 als Stellgröße ein Signal konstanter Frequenz mit variablem Tastverhältnis aus, das zur Ansteuerung des elektropneumatischen Wandlers 12 und damit nach Umsetzung in eine pneumatische Größe (Unterdruck) zur Betätigung des Abgasrückführventils 15 dient.

Die in dem Grundkennfeld 21 gespeicherten Sollwerte werden durch Messungen auf dem Motorprüfstand ermittelt. Sie sind betriebspunktabhängig, d.h. als Funktion der den Betriebspunkt definierenden Parameter, in dem Kennfeld gespeichert.

Um eine schnelle Ansteuerung des Rückführventils 15 bei Änderungen des Motorbetriebszustandes zu bewirken, ist eine Korrektur des vom PI-Regler 24 gelieferten Tastverhältnis anhand weiterer Kennfelder 25, 26, 27 erforderlich, die Korrekturterme des Tastverhältnisses als Funktion der Betriebsparameter des Motors oder von Korrekturgrößen C, D enthalten.

Eine Minimum-Maximumbegrenzung 28 sorgt dafür, daß das ausgegebene Stellsignal und der Integralanteil des PI-Reglers 24 bei bleibender Abweichung zwischen Soll- und Istwert der Frischluftmasse nicht überlaufen. Letzteres ist z.B. bei kleinen Motorbetriebslasten (kleine Einspritzmasse und Drehzahl) denkbar, in denen wegen zu geringer Druckdifferenz über dem Abgasrückführventil 15 keine ausreichende Abgasrückführung mehr möglich ist.

Schalter 29, 30 sind vorgesehen, um die Regelung bzw. die Abgasrückführung in bestimmten Betriebszuständen auszuschalten.

Aufgrund der im Steuergerät ablaufenden Regelkreisstrategien bezüglich der Abgasrückführ- und Einspritzmengenregelung werden herstellungsbedingte Toleranzen des Einspritzsystems (hauptsächlich Einspritzpumpe 18 und Düsen) und Fehler in der Luftmassenbestimmung durch den Luftmassenmesser 2 nicht berücksichtigt. Die nicht an den einzelnen Motor angepaßten Soll- und Vorsteuergrößenangaben in den Kennfeldern wirken sich negativ auf die Emissionen aus. Je nach Streurichtung der emissionsbeeinflussenden Motorkomponenten erzeugt der Motor vergleichsweise zu viele Stickoxide oder Partikel. In der Serienfertigung versucht man deshalb, die Abgasrückführung so auszulegen, daß unter Berücksichtigung der Streuung die vom Gesetzgeber geforderten Grenzwerte immer eingehalten werden.

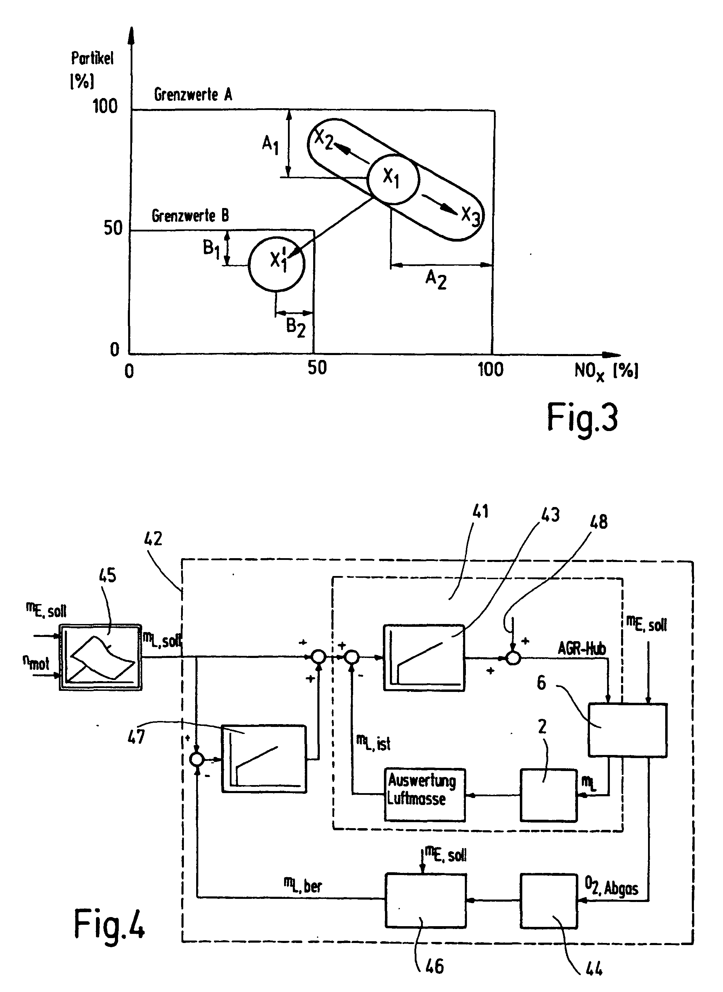

Im Zuge der geforderten Verschärfung der Emissionsgrenzwerte für bestimmte Abgasbestandteile wird es zunehmend schwerer, diese Art der Auslegung ohne gravierende motortechnische Maßnahmen zur Schadstoffreduzierung beizubehalten. Figur 3 veranschaulicht diese Problematik am Beispiel stark streuender Einspritzmengen. An den Achsen des Diagrammes sind jeweils Stickoxid- und Partikelgehalte des Abgases eines Motors prozentual aufgetragen. Dabei wird angenommen, daß die gesetzlich vorgeschriebenen Grenzwerte A jeweils 100% Partikel- beziehungsweise Stickoxidemission bedeuten. Die verschärften Grenzwerte B entsprechen jeweils 50% der Grenzwerte A. Der Kreis $X_1$ bezeichnet das Intervall der Abgaszusammensetzungen eines in der oben beschriebenen Weise geregelten, "idealen" Motors, dessen Komponenten wie etwa Einspritzpumpe, Sensoren etc. ohne Streuung den Spezifikationen entsprechen. Die mittlere Abgaszusammensetzung hält von den Grenzwerten A relativ große Abstände A1 bzw. A2 ein, die es erlauben, daß die Komponenten des Motors in einem gewissen Umfang in Richtung eines fetteren Gemisches (Gebiet $X_2$) oder eines magereren Gemisches (Gebiet $X_3$) streuen, ohne daß dadurch die Grenzwerte überschritten werden.

Für einen engeren Satz von Grenzwerten B ist es zwar möglich, einen Motor zu konstruieren, dessen Abgaszusammensetzung X'1 diese Grenzwerte einhält, allerdings mit kleineren Abständen B1, B2, die Abweichungen in Richtung eines fetteren oder magereren Gemisches nicht mehr zulassen. Um den Einfluß von Streuungen zu begrenzen, werden daher gegenwärtig Abgasrückführ-Regelverfahren entwickelt, die eine zusätzliche Korrektur vorsehen, bei der anhand von Messungen des Luftverhältnisses im Abgas Abweichungen zwischen diesem Luftverhältnis und dem für gegebene Einspritzmengen und Frischluftmassen erwarteten Luftverhältnis erkannt werden und somit z.B. herstellungsbedingten Einspritzmengentoleranzen der Kraftstoffpumpe beziehungsweise Fehlern der Luftmassenbestimmung entgegengewirkt werden kann.

Figur 4 zeigt das Prinzip eines solchen, sogenannten "lamdabasierten" Regelverfahrens. Die Vorrichtung umfaßt einen sogenannten Luft-Regelkreis 41, dem ein äußerer Lambda-Regelkreis 42 aufgesetzt ist. Ein Kennfeld 45, das dem Kennfeld 21 aus Figur 2 entspricht, liefert einen Sollwert $m_{L,soll}$ der Frischluftmasse in Abhängigkeit von einer Soll-Einspritzmenge $m_{E,soll}$ und der Motordrehzahl $n_{mot}$. Die Differenz zwischen dem Sollwert $m_{L,soll}$ zuzüglich einer Korrekturluftmasse $m_{L,korr}$ und der von einem Luftmassenmesser 2 im Ansaugtrakt des Motors 6 gemessenen Frischluftmasse $m_{L,ist}$ bildet die Eingangsgröße eines PI-Reglers 43. Das Ausgangssignal des PI-Reglers 43 wird einem Vorsteuersignal 48 überlagert und an das Abgasrückführventil des Motors 6 angelegt.

Der mit einer Soll-Einspritzmasse $m_{E,soll}$ beaufschlagte Motor 6 liefert ein Abgas, dessen Restsauerstoffgehalt $O_{2Abgas}$ von einer Lambdasonde 44 erfaßt wird. Eine Schaltung 46 errechnet anhand des Meßsignales der Lambdasonde 44 und der Soll-Einspritzmenge $m_{E,soll}$ eine Frischluftmasse $m_{L,ber}$. Im Idealfall sollte diese Frischluftmasse mit der Soll-Frischluftmasse $m_{L,soll}$ des Kennfeldes übereinstimmen. Eine auf Streuung zurückzuführende Differenz zwischen den beiden Sollwerten wird als Eingangsgröße auf einen PI-Regler 47 gegeben, dessen Ausgangssignal $m_{L,korr}$ dem Sollwert $m_{L,soll}$ additiv überlagert wird. Auf diese Weise wird die Abgasrückführung je nach Emissionsstreurichtung des Motors zurückgenommen oder erhöht, so daß die über den Sollwert $m_{L,soll}$ ursprünglich indirekt vorgegebenen Abgasrückführraten wieder den zu erwartenden betriebspunktabhängigen Motoremissionen entsprechen. Beide Regelkreise 41, 42 sind so ausgelegt, daß der Lambdaregelkreis 42 gegenüber dem Luftregelkreis 41 nur korrigierende Wirkung besitzt, also keinen direkt regelnden Einfluß auf das Abgasführventil hat.

Eine derartige langsame Korrektur des Frischluftmassen-Sollwertes durch den Lamdaregelkreis 42 funktioniert lediglich in den Motorbetriebszuständen sinnvoll, in denen sich das Luftverhältnis nur geringfügig ändert und wegen der mit zunehmendem Luftverhältnis steigenden Ungenauigkeit der Lambdasonde 44 nicht zu hoch liegt. Außerdem müssen Betriebspunkte von der Regelung ausgeschlossen bleiben, bei denen keine Abgasrückführung vorgesehen ist oder aus physikalischen Gründen trotz maximal angesteuertem Abgasrückführventil keine weitere Erhöhung bzw. Verminderung der Abgasrückführung möglich ist.

Wenn sich der Betriebspunkt des Motors ändert und dementsprechend andere Soll-Einspritzmassen bzw. Soll-Frischluftmassen vorgegeben werden müssen, dauert es eine gewisse Zeit, bis eine dadurch bedingte Änderung der Abgaszusammensetzung sich in einer Änderung des Ausgangssignales der Lambdasonde und der daraus berechneten Frischluftmasse $m_{L,ber}$ niederschlägt. Insbesondere bei Kompressorsystemen ist die Verzögerung beträchtlich, da die prinzipbedingte Druckempfindlichkeit der Lambdasonde dazu zwingt, diese hinter die Abgasturbine einzubauen.

Dies führt bei einer stark dynamischen Fahrweise dazu, daß mit dem oben beschriebenen herkömmlichen Ansatz aufgrund der Gaslaufzeiten und des Einregelverhaltens des Luftregelkreises keine vernünftige Korrektur des Frischluftmassen-Sollwertes in vertretbarer Zeit erfolgen kann. Dies kann neben Emissionsverschlechterungen auch Fahrverhaltensprobleme wie etwa Drehmomenteneinbrüche aufgrund von zu niedrig korrigierten Frischluftmassenströmen zur Folge habe.

Aufgabe der vorliegenden Erfindung ist, ein Verfahren und eine Vorrichtung zum Regeln des Luftverhältnisses einer Brennkraftmaschine mit Abgasrückführung anzugeben, die es erlauben, einen sinnvollen Korrekturwert für die Regelung des Luftverhältnisses mit minimaler Verzögerung anzugeben.

Die Aufgabe wird zum einen gelöst durch ein Verfahren nach Anspruch 1. Anstatt wie bisher die notwendige Korrekturgröße bei jeder Änderung des Motorbetriebspunktes neu einzuregeln, werden Werte diese Korrekturgröße erfindungsgemäß als Funktionen der Betriebsparameter gespeichert, so daß, wenn der Motor einen neuen Betriebspunkt einnimmt, ein für diesen Betriebspunkt geltender Wert der Korrekturgröße unverzüglich zugreifbar ist und dem Sollwert überlagert wird.

Unter einem Betriebspunkt wird jeweils eine Kombination von Werten der Betriebsparameter verstanden. Diese Betriebspunkte bilden einen n-dimensionalen Raum, wenn n die Zahl der Betriebsparameter ist.

Immer dann, wenn sich der Motor in einem stationären Zustand befindet, wird der für den betreffenden Betriebspunkt geltende Wert der Korrekturgröße so adaptiert, daß sich der korrigierte Sollwert einem Wert annähert, der zu einem Abgleich zwischen dem berechneten Wert aus dem gemessenen Luftverhältnis und dem unkorrigierten Sollwert führt.

In dem Speicherelement, das die Werte der Korrekturgröße aufnimmt, sind zweckmäßigerweise jeweils Werte der Korrekturgröße für einzelne, voneinander beabstandete Betriebspunkte, als Stützstellen bezeichnet, gespeichert. Für diejenigen Betriebspunkte des Motors, die keine Stützstellen sind, wird die Korrekturgröße durch Interpolation zwischen den Stützstellen berechnet.

Um eine zügige Adaptierung der einzelnen Betriebspunkte zu ermöglichen, ist zweckmäßigerweise für jede Stützstelle eine Umgebung in dem Raum der Betriebspunkte definiert, und eine Stützstelle wird dann adaptiert, wenn der aktuelle Betriebspunkt sich in der Umgebung einer Stützstelle befindet. Das heißt, um eine Adaptierung zu ermöglichen, ist es nicht erforderlich, daß aktueller Betriebspunkt des Motors und Stützstelle identisch sind, eine Adaptierung erfolgt auch dann, wenn die Abweichungen zwischen den Parameterwerten des Betriebspunktes und denen der Stützstelle nicht zu groß ist.

Wenn der Motor auf Betriebspunkten arbeitet, die sich in einem Zwischenbereich zwischen zwei Stützstellen bewegen, so kann dies zu dem Problem führen, daß in ständigem Wechsel der eine oder der andere Betriebspunkt adaptiert wird. Eine bevorzugte Möglichkeit, dies zu vermeiden, ist, eine Hysterese einzuführen, indem die Umgebungen der Stützstellen so gewählt werden, daß die Umgebungen benachbarter Stützstellen an ihren Rändern überlappen, und daß, wenn der Betriebspunkt des Motors in einen solchen Überlappungsbereich eintritt, diejenige Stützstelle, in dessen Umgebung der Betriebspunkt neu eingetreten ist, nicht adaptiert wird, bevor der Betriebspunkt nicht die Umgebung der anderen Stützstelle verlassen hat. Solange die Umgebung der anderen Stützstelle nicht verlassen wird, erfolgt weiterhin ihre Adaptierung.

Eine andere Möglichkeit, ein solches Umschalten zu vermeiden ist, die Umgebungen der Stützstellen jeweils so festzulegen, daß sie durch Zonen getrennt sind, die keiner Umgebung angehören. Wenn der Betriebspunkt des Motors sich in einer solchen Zone befindet, findet keine Adaptierung statt.

Je nach Fahrstil eines Fahrers und Anwendungsumgebung eines Kraftfahrzeuges kann es Gegenden im Raum der möglichen Betriebspunkte geben, die vom aktuellen Betriebspunkt des Motors nicht oder selten aufgesucht werden. Um eine Adaptierung auch solcher Bereiche zu ermöglichen, ist vorzugsweise vorgesehen, daß der Gradient der Korrekturgröße überwacht wird, und daß Stützstellen, die einer gerade in Adaptierung befindlichen Stützstelle benachbart sind, in die gleiche Richtung wie diese adaptiert werden, wenn anderenfalls der Gradient der Korrekturgröße einen Grenzwert überschritte. Diese Regelung beruht auf der Vorstellung, daß die Korrekturgröße eine stetige Funktion der Betriebsparameter mit begrenzter Steigung ist, und daß deshalb eine genaue Kenntnis des Wertes der Korrekturgröße für eine gegebene Stützstelle einen Rückschluß auf den Wert der Korrekturgröße an benachbarten Stützstellen zuläßt. Indem der Gradient der Korrekturgröße nicht nur für die unmittelbaren Nachbern der in Adaptierung befindlichen Stützstelle, sondern im gesamten Raum der Betriebspunkte überwacht wird, ist es möglich, daß die Adaptierung einer Stützstelle nicht nur den Wert der Korrekturgröße für ihre unmittelbaren Nachbarn beeinflußt, sondern auch für weiter entfernte Stützstellen.

Wesentlich für die Qualität der Adaptierung ist, daß sie nur zu Zeiten durchgeführt wird, zu denen das von der Lambasonde gemessene Luftverhältnis einen sicheren Rückschluß auf die gleichzeitigen Verbrennungsbedingungen im Motor zuläßt. Eine Adaptierung wird daher vorzugsweise nur dann durchgeführt, wenn eine oder mehrere der folgenden Bedingungen erfüllt ist:

- das Tastverhältnis des Abgasrückführventils liegt innerhalb eines erlaubten Bereiches,
- die Abgasrückführregelung ist freigegeben,
- die Motordrehzahl liegt innerhalb eines erlaubten Bereiches,
- die Einspritzmenge und/oder ihre zeitliche Änderung liegen innerhalb eines erlaubten Bereiches,
- das gemessene Luftverhältnis und/oder seine zeitliche Änderung liegen innerhalb eines erlaubten Bereiches.

Um die gezielte Regelung des Luftverhältnisses auch in Phasen sich ändernder Betriebsparameter des Motors zu verbessern, ist gemäß einer bevorzugten Ausgestaltung des Verfahrens vorgesehen, den Meßwert der Lambdasonde zu korrigieren, um Laufzeiten des Abgases auszugleichen. Eine solche Korrektur kann insbesondere dadurch erfolgen, daß ein zu erwartender Wert der Lambdasonde anhand des aktuellen Betriebspunktes berechnet wird, und daß der gleiche berechnete Wert um eine Zeit, die in etwa der Abgaslaufzeit entspricht, verschoben, wieder subtrahiert wird.

Die Aufgabe wird ferner gelöst durch eine Vorrichtung nach Anspruch 17. Weitere Merkmale und Vorteile der Erfindung ergeben sich aus der nachfolgenden Beschreibung von Ausführungsbeispielen.

Figur 1     zeigt den Aufbau des Luftversorgungssystems eines Turbo-Dieselmotors, auf den die vorliegende Erfindung anwendbar ist.

Figur 2     zeigt ein herkömmliches Schema zum Regeln der Verbrennungsluftzusammensetzung eines Motors;

Figur 3     veranschaulicht die Problematik von Fertigungsstreuungen bei der Bekämpfung des Schadstoffgehaltes von Abgasen;

Figur 4     zeigt ein Schema des als nächstliegender Stand der Technik angesehenen Regelungsprinzips;

Figur 5     zeigt eine Vorrichtung zum Regeln der Verbrennungsluftzusammensetzung gemäß einer ersten Ausgestaltung der Erfindung;

Figur 6     zeigt einen Ausschnitt aus dem von der Regelvorrichtung aus Figur 5 verwendeten Interpolationskennfeld;

Figuren 7 und 8     veranschaulichen die Gradientenüberwachung im Interpolationskennfeld;

Figur 9     zeigt verschiedene Möglichkeiten der Berechnung der Frischluftmasse $m_{L,ber}$ aus dem Signal der Lambdasonde;

Figur 10     veranschaulicht das Prinzip der Laufzeitkompensation bei der Auswertung des Signales der Lambdasonde;

Figur 11     zeigt ein zweites Ausführungsbeispiel der Erfindung; und

Figur 12     zeigt verschiedene Möglichkeiten zur Berechnung eines Sollwertes des Luftverhältnisses.

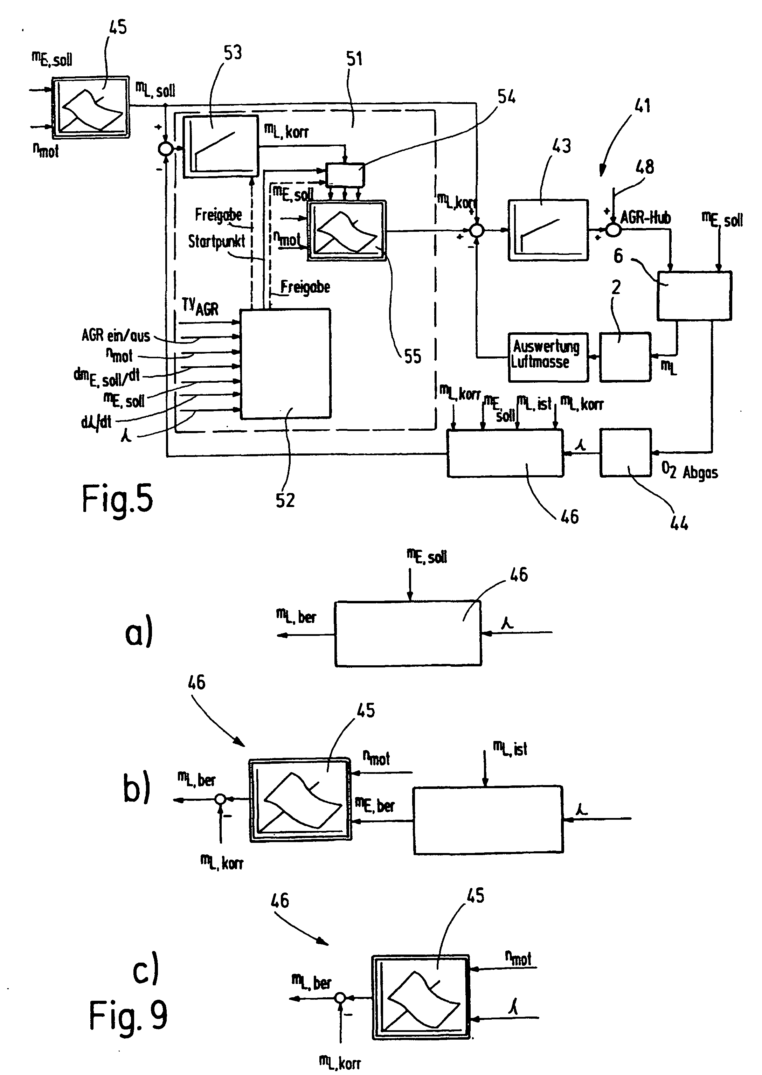

Die in Figur 5 dargestellte Regelvorrichtung umfaßt einen Luftregelkreis 41, der dem in Figur 4 gezeigten entspricht und deshalb nicht erneut beschrieben wird. Auch das in einem Speicherelement enthaltene Kennfeld 45 für den Luftmassen-Sollwert $m_{L,soll}$, die Lambdasonde 44 und die Schaltung 46 zum Berechnen der Luftmasse $m_{L,ber}$ aus dem Ausgangssignal der Lambdasonde 44 entsprechen den mit Bezug auf Figur 4 beschriebenen Komponenten. Die Arbeitsweise der Steuerschaltung 51 unterscheidet sich jedoch von der des Lambdaregelkreises 42. Die Steuerschaltung 51 umfaßt eine Verwaltungseinheit 52, einen PI-Regler 53, der einen Eingang der Steuerschaltung 51 bildet und als Korrekturgröße die Differenz zwischen dem von dem Kennfeld 45 betriebspunktabhängig vorgegebenen Sollwert $m_{L,soll}$ und dem Luftmassenwert $m_{L,ber}$ der Schaltung 46 empfängt. Anstelle des PI-Reglers 53 könnte alternativ ein reiner Integralregler vorgesehen werden. Ein durch die Verwaltungseinheit 52 angesteuertes Interpolationskennfeld 55 umfaßt ein RAM 54, das für eine Mehrzahl von ausgewählten Betriebspunkten des Motors, als Stützstellen bezeichnet, Luftmassen-Korrekturwerte enthält sowie eine Interpolationsschaltung. Die Betriebspunkte des Motors sind jeweils definiert durch die Motordrehzahl $n_{mot}$ und die Soll-Einspritzmenge $m_{E,soll}$. Das RAM 54 liefert zu eingegebenen Werten der Betriebsparameter die Werte der Korrekturgröße für die jeweils nächstbenachbarten Stützstellen. Die Interpolationsschaltung ermittelt anhand einer mathematischen Funktion aus diesen Stützstellen durch eine betriebspunktabhängige Interpolation den tatsächlichen Korrekturwert. Im vorliegenden Fall mit zwei Betriebsparametern $n_{mot}$, $m_{E,soll}$ ist die Zahl der Stützstellen 4; allgemein ist sie $2^n$, wenn n die Zahl der für die Interpolation herangezogenen Parameter ist. Die Interpolationsschaltung liefert anhand dieser Werte und der ebenfalls in sie eingegebenen Betriebsparameter einen linear interpolierten Luftmassen-Korrekturwert $m_{L,korr}$, der das Ausgangssignal der Steuerschaltung darstellt.

Die Interpolationsschaltung ist nicht eigens in der Figur dargestellt, da sie nicht notwendigerweise eine physisch eigenständige Schaltungskomponente ist. Sie kann zum Beispiel durch einen Mikroprozessor mit einem geeigneten Steuerprogramm realisiert sein, der auch die Aufgaben der Verwaltungseinheit 52 wahrnimmt.

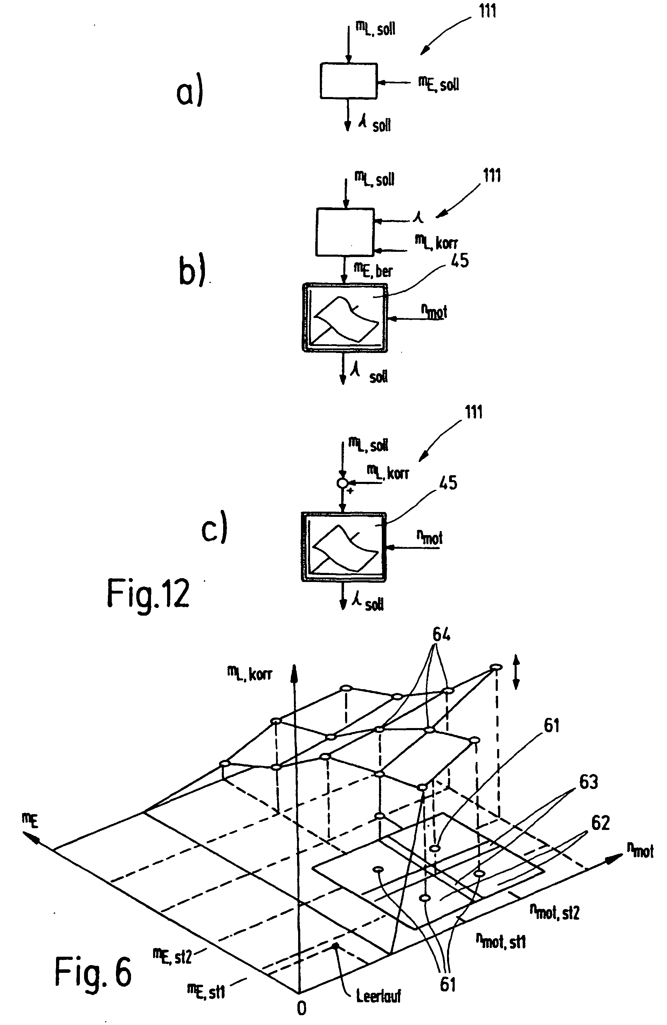

Figur 6 veranschaulicht den Inhalt des Interpolationskennfeldes 55. Der Raum der Betriebspunkte ist hier zweidimensional und entspricht der von den Achsen $n_{mot}$, $M_e$ des dargestellten Koordinatensystems aufgespannten Ebene. In dieser Ebene ist eine Vielzahl von Stützstellen festgelegt, von denen vier, die jeweils Kombinationen der Einspritzmassen $m_{E,st1}$ und $m_{E,st2}$ bzw. $n_{mot,st1}$ und $n_{mot,st2}$ entsprechen, besonders herausgehoben und mit dem Bezugszeichen 61 bezeichnet sind. Jedem Stützpunkt ist ein Wert der Korrekturluftmenge $m_{L,korr}$ zugeordnet, dargestellt als Kreis 64.

Um die Stützstellen 61 herum sind jeweils Umgebungen, als Lernfenster 62 bezeichnet, definiert. Benachbarte Lernfenster 62 weisen jeweils überlappende Randzonen 63 auf. Für einen gegebenen Betriebspunkt des Motors wird ein passender Wert der Korrekturluftmenge $m_{L,korr}$ durch lineare Interpolation zwischen den Korrekturluftmengenwerten der benachbarten Stützstellen von der Interpolationsschaltung berechnet und an den Luftregelkreis 41 ausgegeben. Auf diese Weise kann bei einem Wechsel des Betriebspunktes des Motors unverzüglich ein Korrekturwert bereitgestellt werden, der an diesen Betriebspunkt angepaßt ist.

Immer dann, wenn die Verwaltungseinheit 52 anhand der von ihr überwachten Eingangsgrößen, z.B. dem Tastverhältnis $TV_{AGR}$ des Abgasrückführventils, dem Betriebszustand ein/aus der Abgasrückführung $AGR_{ein/aus}$, der Motordrehzahl $n_{mot}$, der Soll-Einspritzmenge $m_{E,soll}$ sowie ihrer zeitlichen Ableitung $dm_{E,soll}/dt$ dem Signal $\lambda$ der Lambdasonde 44 oder ihrer zeitlichen Ableitung $d\lambda/dt$ feststellt, daß sich der Motor in einem stationären Betriebszustand befindet, initialisiert die Verwaltungseinheit den PI-Regler 53 mit demjenigen Korrekturwert, der zu der Stützstelle 61 im Kennfeld 55 gespeichert ist, in deren Lernfenster 62 sich der aktuelle Betriebspunkt befindet. Dann gibt sie den PI-Regler 53 frei, so daß dessen Ausgangssignal $m_{Lkorr,Stpkt}$ entsprechend dem Eingangswert $m_{L,soll}-m_{L,ber}$ der Steuerschaltung 51 driften kann.

Der dem Betriebspunkt zugeordnete Korrekturwert im Interpolationskennfeld 55 wird mit dem driftenden Ausgangssignal des PI-Reglers 53 überschrieben. Da sich somit die Eingangsgrößen der Interpolationsschaltung 56 ändern, driftet auch ihr Ausgangssignal $m_{L,korr}$. Die Drift hält so lange an, bis die Regeldifferenz des PI-Reglers 53 Null wird oder die Verwaltungseinheit 52 den PI-Regler 53 aufgrund einer Überschreitung von Wertegrenzen der überwachten Eingangssignale, zum Beispiel aufgrund einer Änderung des Betriebspunktes des Motors, wieder sperrt.

Der bis zu diesem Zeitpunkt erreichte Wert der Korrekturluftmasse bleibt für den betreffenden Betriebspunkt im Interpolationskennfeld 55 gespeichert. Wenn sich der neue Betriebspunkt als stationär erweist, erfolgt eine erneute Initialisierung des PI-Reglers 53 mit dem zugehörigen Wert der Korrekturgröße, und der Adaptierungsprozeß wird für den neuen Betriebspunkt fortgesetzt. Auf diese Weise können alle möglichen Betriebspunkte des Motors im Laufe der Zeit mit einem einzigen Regler adaptiert werden.

Kleine Veränderungen des Motorbetriebspunktes, bei denen dieser die Umgebung einer Stützstelle nicht verläßt, werden als stationärer Zustand des Motors behandelt und führen nicht zur Unterbrechung des Adaptierungsprozesses. Wenn der Betriebspunkt in einen Überlappungsbereich zwischen zwei Stützstellenumgebungen eindringt, so wird der Adaptierungsprozeß für diejenige Stützstelle fortgesetzt, in deren Lernfenster sich der Betriebspunkt zuvor bereits befunden hat. Ohne diese Überlappungsbereiche mit Hysteresefunktion würden geringe Verlagerungen des Betriebspunktes im Grenzbereich zwischen zwei Lernfenstern ständig zu einem Wechsel der zu adaptierenden Stützstelle führen.

Denkbar wäre auch, einen definierten Abstand zwischen zwei Lernfenstem zu lassen, in dem keine Adaptierung stattfindet. Dies hat aber zur Folge, daß es Motorbetriebspunkte gibt, in denen eine Adaptierung willkürlich ausgeschlossen ist, was die Geschwindigkeit der Adaptierung unnötig reduzieren könnte.

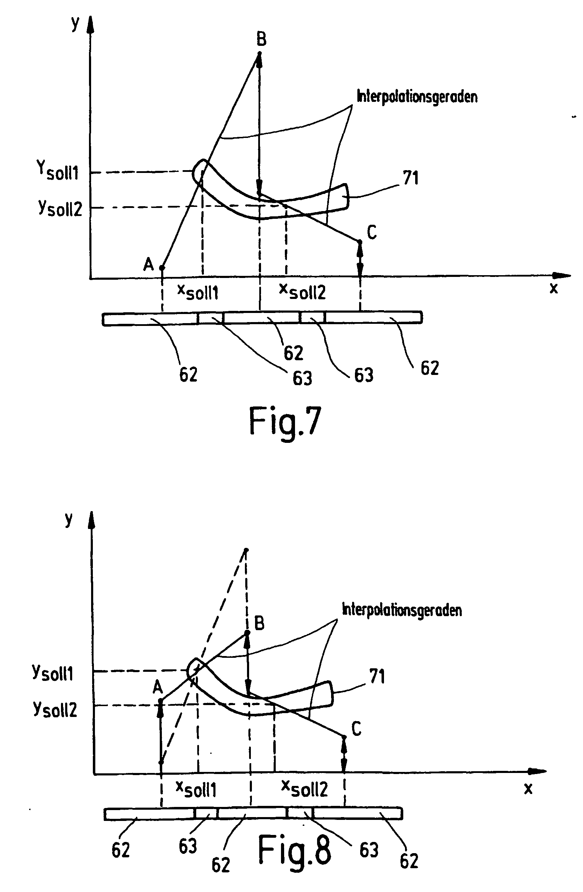

Das Adaptieren einzelner Stützstellen in einem umfangreichen Betriebspunktraum birgt die Gefahr, daß Polstellen erzeugt werden. Aufgrund der Motorbetriebsweise in einem Kraftfahrzeug gibt es Betriebspunkte, die sehr oft, wenig oder nur sehr selten adaptiert werden können. Diese liegen häufig dicht beieinander. Um einen über zwei oder mehr benachbarte Stützstellen interpolierten Korrekturwert gemäß der Regelabweichung zu gewinnen, müssen die Korrekturwerte der adaptierbaren Stützstellen entsprechend stark verändert werden. Insbesondere wenn der Betriebspunkt nah am Rand eines Lernfensters liegt, übt er eine starke "Hebelwirkung" bei der Adaptierung aus. Nimmt man zum Beispiel an, daß die optimale Adaptierung zweier benachbarter Stützstellen zu gleichen Korrekturwerten führen würde, der eine aber einen Korrekturwert aufweist, der um einen Betrag $\Delta$ zu klein ist, so führt die Adaptierung der anderen Stützstelle dazu, daß diese, wenn der aktuelle Betriebspunkt von beiden Stützstellen gleich weit entfernt ist, gegen einen Wert konvergiert, der um $\Delta$ zu groß ist. Die Folge sind steile Interpolationsgeraden zwischen den Stützstellen, die zu Instabilitäten in der Korrekturwertberechnung führen können und den gesamten Regelkreis zu Schwingungen anregen können. Figuren 7 und 8 verdeutlichen dieses Problem.

Diese zwei Figuren zeigen jeweils einen Schnitt durch den Betriebspunktraum aus Figur 6 entlang der Achse der Korrekturgröße, die in diesen Figuren mit Y bezeichnet ist. Drei Lernfenster 62 sind jeweils Werte der Korrekturgröße entsprechend Punkten A, B, C zugeordnet. 71 bezeichnet einen oft durchfahrenen Betriebspunktbereich. Wenn sich der Motor in dem Bereich 71 bewegt, findet häufig eine Adaptierung des Punktes B statt, gelegentlich eine des Punktes C, aber selten eine des Punktes A. Wenn der Motor den Betriebspunkt $x_{soll1}$ innehat, ist $y_{soll1}$ der zutreffende Wert der Korrekturgröße. Da der Wert A zu niedrig liegt, führt die Adaption der Stützstelle B anhand des Betriebspunkts $x_{soll1}$ zu einem unrealistisch hohen Wert. Wenn sich der Motor später an einem anderen Betriebspunkt $x_{soll2}$ mit dem zugehörigen Korrekturwert $y_{soll2}$ befindet, findet eine Adaption der Stützstelle von B in Gegenrichtung statt. Um derartige Erscheinungen zu vermeiden, ist eine Überwachung des Gradienten der Korrekturgröße vorgesehen. Immer wenn die Adaptierung einer Stützstelle zu einer Überschreitung des Gradienten führen würde, wird nicht nur die entsprechende Stützstelle, sondern auch eine benachbarte in die Adaptierung einbezogen und in die gleiche Richtung adaptiert. Dies führt, wie in Figur 8 gezeigt, zu einer Anhebung des Korrekturwertes A und infolgedessen zu einer verminderten Variabilität des Korrekturwertes B. Da alle Stützstellen im Kennfeld überwacht werden, kann sich eine solche ausgleichende Korrektur auch auf übernächste Nachbarn ausgehend von der verursachenden Stützstelle aus fortsetzen. Polstellen können dadurch vermieden werden.

Denkbar wäre auch, zu weit adaptierte Stützstellen von einer weiteren Adaptierung auszuschließen, bis alle Nachbarstützstellen durch den PI-Regler nachgeregelt worden sind. In diesem Fall ist die für eine optimale Adaptierung des gesamten Kennfeldes erforderliche Zeit aber wesentlich größer als bei der erstgenannten, bevorzugten Alternative. Unter Umständen ist eine vollständige Adaptierung auch überhaupt nicht möglich, da evtl. benachbarte Lernfenster bedingt durch die Fahrweise und die damit verbundene Motorbetriebspunktwahl nie erreicht und damit nie adaptiert werden.

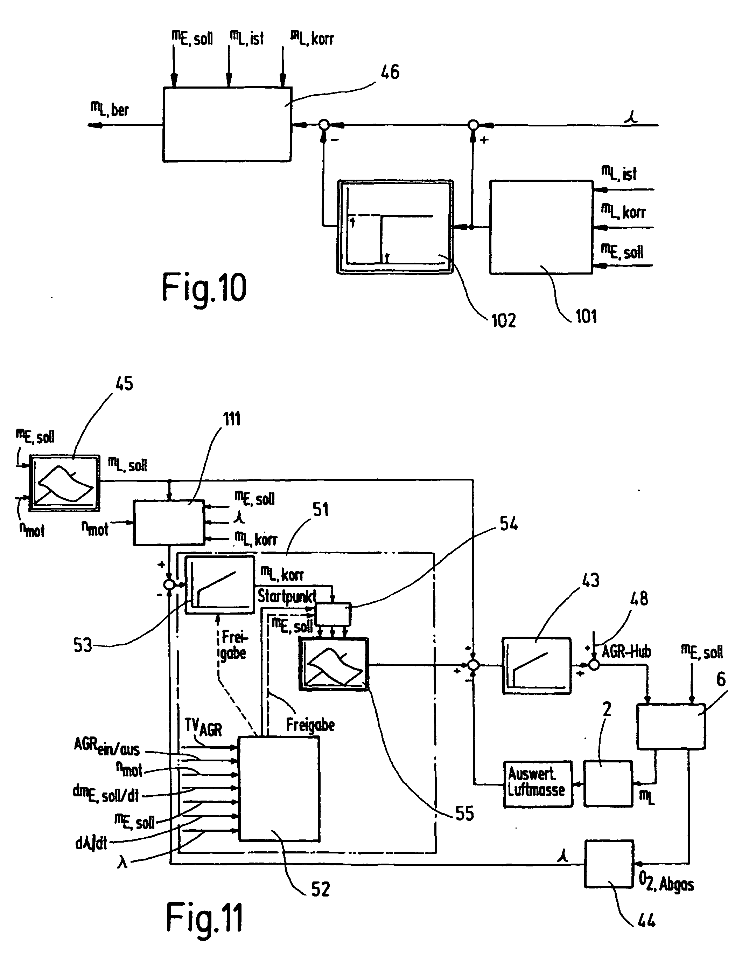

Figur 9 zeigt verschiedene Alternativen für den Aufbau der Schaltung 46 zum Berechnen der Frischluftmasse $m_{L,ber}$ aus dem Ausgangssignal der Lambdasonde 44. Gemäß Figur 9a wird die Luftmasse über eine einfache formale Beziehung aus dem Ausgangssignal $\lambda$ und der Einspritzsollmenge $m_{E,soll}$ berechnet. Diese Lösung entspricht der Arbeitsweise der Schaltung 46 aus Figur 4. Fehler des Luftmassenmessers 2 werden durch diese Lösung korrekt behoben. Eventuelle Nichtlinearitäten des Luftmassensollwert-Kennfeldes 45 bleiben hier allerdings unberücksichtigt. Dies führt dazu, daß bei Einspritzmassenfehlem eine Überkompensation in der Adaption stattfindet, die der gewünschten Einengung der Toleranzen im Schadstoffausstoß des Motors entgegenwirkt.

Bei der in Figur 9b dargestellten Variante erfolgt die Berechnung unter Einbezug der Nichtlinearitäten des Kennfeldes 45 richtig. Eingangsgrößen sind hier das das von der Sonde 44 gemessene Luftverhältnis $\lambda$, die gemessene Luftmasse $m_{L,ist}$, die Korrekturluftmasse $m_{L,korr}$ und die Motordrehzahl $n_{mot}$. Anhand eines mathematischen Modells wird aus $\lambda$ und der Luftmasse $m_{L,ist}$ eine Einspritzmenge $m_{E,ber}$ berechnet, und mit dieser berechneten Einspritzmenge als Parameter wird auf das bereits in Figur 5 gezeigte Kennfeld 45 zugegeriffen. Bei dem in der Figur gezeigten Kennfeld 45 handelt es sich um die gleiche Schaltung wie beim Kennfeld 45 der Figur 5. Das Kennfeld wird so im Zeitmultiplex genutzt, um einmal die Soll-Luftmasse $m_{L,soll}$ und das andere Mal $m_{L,ber}$ zu ermitteln. Hier werden zwar Luftmassenmesser-Fehler nicht korrekt ausgeregelt, da für die Berechnung der Kennfeldeingangsgröße $m_{E,ber}$ die fehlerhaft gemessene Luftmasse $m_{L,ist}$ eingeht, die ja eigentlich korrigiert werden soll. Die Auswirkungen der hierdurch verursachten Adaptionsfehler auf die Streuung der Emissionswerte ist jedoch erheblich geringer als bei der Variante von Figur 9a, da keine Überkompensation auftritt.

Die Variante der Figur 9c sieht die Umstellung des Kennfeldes 45 vor, derart, daß als Eingangsgrößen die Motordrehzahl $n_{mot}$, und, anstelle der Solleinspritzmenge, das von der Sonde 44 gemessene Luftverhältnis $\lambda$ eingehen. Vorteil dieses Ansatzes ist, daß das Einregelverhalten aufgrund der Nichtlinearität in den steilen Kennfeldbereichen sehr schnell erfolgt. Es ist jedoch wichtig, darauf zu achten, daß stets eine eindeutige Beziehung zwischen $\lambda$ und der interpolierten Luftmasse besteht, so daß die oben beschriebene Adaption möglich bleibt. Wie im Fall von Figur 9b kann bei diesem Ansatz nur der Einspritzmassenfehler richtig korrigiert werden. Setzt man dagegen $m_{L,korr}$ bei der nachgeschalteten Subtraktion zu Null, würde eine korrekte Luftmassenfehler-Korrektur erfolgen.

In dynamischen Betriebsphasen des Motors, d.h. in Phasen, in denen sich der Betriebspunkt des Motors schnell ändert, wirken sich Änderungen der Einspritzmenge oder der Frischluftzufuhr erst mit einer durch die Ausbreitungszeit des Abgases im Abgastrakt bedingten Verzögerung auf das Signal des Lambdasensors aus. Um die Wirkung einer solchen Verzögerung bei der Regelung in dynamischen Phasen zu verringern, ist eine sogenannte prädiktive, also eine zeitlich vorausschauende Regelung vorgesehen. Abbildung 10 zeigt eine diesbezügliche Weiterentwicklung. Eine Rechenschaltung 101 berechnet anhand eines mathematischen Modells unter Verwendung von $m_{L,ist}$, $m_{L,korr}$ und $m_{E,soll}$ als Eingangsgrößen ein zu erwartendes Signal der Lambdasonde, das zu dem tatsächlichen Ausgangssignal der Lambdasonde hinzuaddiert wird. Gleichzeitig wird dieses erwartete Signal in ein Totzeitglied 102 eingespeist, dessen Ausgangssignal dem der Rechenschaltung 101 mit einer zeitlichen Verzögerung folgt, die in etwa der Verzögerung der Lambdasonde 44 selbst entspricht. In einem stationären Zustand des Motors heben sich die Beiträge der Rechenschaltung 101 und des Totzeitgliedes 102 gegenseitig auf. Im instationären Motorbetrieb hingegen kompensiert das Ausgangssignal des Totzeitgliedes 102 im wesentlichen das der Lambdasonde, und das berechnete Ausgangssignal der Rechenschaltung 101 bildet die Eingangsgröße für die Schaltung 46. Auf diese Weise erfolgt die Berechnung der Regeldifferenz $M_{L,soll}-m_{L,ber}$ auch in dynamischen Motorbetriebsphasen annähernd korrekt.

Figur 11 zeigt eine zweite Ausgestaltung der erfindungsgemäßen Regelvorrichtung, die sich von der in Figur 5 dargestellten im wesentlichen dadurch unterscheidet, daß die Schaltung 46 durch eine Schaltung 111 ersetzt ist, die zwischen dem Ausgang des Kennfeldes 45 und dem Eingang der Steuerschaltung 51 angeordnet ist und einen erwarteten Wert des Luftverhältnisses $\lambda_{L,soll}$ anhand verschiedener Eingangsgrößen berechnet. Die Eingangsgröße des PI-Reglers 53 der Steuerschaltung 51 hat somit die Bedeutung einer Luftverhältnisdifferenz, gebildet aus dem berechneten Luftverhältnis $\lambda_{soll}$ und dem gemessenen Luftverhältnis $\lambda$. Die Arbeitsweise der Steuerschaltung 51 unterscheidet sich deswegen aber nicht von der mit Bezug auf Figur 5 beschriebenen.

Auch für den Aufbau der Schaltung 111 sollen drei Beispiele mit Bezug auf Figur 12 angegeben werden. Figur 12a entspricht der Umkehrung der Vorgehensweise in Figur 9a. Aus den Größen $m_{L,soll}$ und $m_{E,soll}$ wird $\lambda_{L,soll}$ über eine einfache mathematische Beziehung ermittelt. Die Vor- und Nachteile dieser Lösung sind die gleichen wie im Falle von Figur 9a.

Die Variante von Figur 12b führt die Berechnung einer Einspritzmasse $m_{E,ber}$ anhand der Eingangsgrößen $m_{L,soll}$, $\lambda$ und $m_{L,korr}$ aus und bestimmt das Soll-Luftverhältnis $\lambda_{soll}$ anhand eines modifizierten Kennfeldes, das jeweils Sollwerte des Luftverhältnisses als Funktionen der Einspritzmasse und der Motordrehzahl enthält. Dieser Ansatz führt - vergleichbar dem von Figur 9b - auch bei Einspritzmengenfehlern zu einer korrekten Bestimmung der Korrekturluftmasse $m_{L,korr}$. Das gleiche gilt für den Ansatz von Figur 12c. Hier wird ein Kennfeld verwendet, das das Soll-Luftverhältnis $\lambda_{soll}$ als Funktion der Frischluftmasse und der Motordrehzahl enthält, und die Frischluftmasse wird erhalten durch Addition von $m_{L,soll}$ und $m_{L,korr}$.

Auch bei den Ausgestaltungen der Figuren 11 und 12 ist eine prädiktive Regelung wie mit Bezug auf Figur 10 erläutert möglich, indem eine Rechenschaltung und ein Totzeitglied wie die Komponenten 101, 102 aus Figur 10 an den Ausgang der Lambdasonde 44 angeschlossen werden.

Eine weitere Abwandlungsmöglichkeit ist, anstatt des Luftverhältnisses $\lambda$ das Äquivalentverhältnis $\Phi$ = $1/\lambda$ einzusetzen. Vorteile ergeben sich hierdurch hauptsächlich in der Behandlung des eingeschränkteren Wertebereiches von $\Phi$, der sich zwischen 0 und 1 befindet, wohingegen $\lambda$ definitionsgemäß 0 bis unendlich betragen kann und daher vor allem bei großen Werten Berechnungsprobleme bereitet. Durch die Umstellung auf $\Phi$ konnte zusätzlich ein geringfügig gutmütigeres Regelverhalten beobachtet werden.

Statt der direkten Vorgabe eines Luftmassensollwertes $m_{L,soll}$ über ein Kennfeld kann ebenfalls die Größe $\lambda$ oder $\Phi$ als Kennfeldvorgabe dienen. Die Umrechnung in $m_{L,soll}$ erfolgt dann gemäß der Gleichung:

$$m_{L,soll} = L_{Min} \cdot \lambda \cdot m_{E,soll}$$

beziehungsweise

$$m_{L,soll} = L_{Min} \cdot \frac{1}{\Phi} \cdot m_{E,soll}$$

mit $L_{min}$ als stöchiometrisches Luftverhältnis ($L_{min}$=14,5 für Diesel) und der Einspritzsollmenge $m_{E,soll}$. Die Umstellung auf $\lambda$ oder $\Phi$ bietet Potential für eine Applikationserleichterung und ist zudem die eigentliche Wunschgröße für die Abgasrückführregelung.

**Patentansprüche**

1. Verfahren zum Regeln des Luftverhältnisses eines Verbrennungsmotors (6) mit Abgasrückführung, bei dem ein die Frischluftmassenzufuhr charakterisierender Sollwert ($m_{L,soll}$,$\lambda_{soll}$) in Abhängigkeit vom Betriebspunkt des Motors vorgegeben wird, dieser Sollwert durch Überlagern einer anhand von Messungen des Luftverhältnisses des Abgases erhaltenen Korrekturgröße korrigiert und der korrigierte Sollwert als Eingangsgröße eines Regelkreises (41) für die Abgasrückführung eingesetzt wird, **dadurch gekennzeichnet, daß** Werte der Korrekturgröße in einem Speicherelement (54) als Funktion des Betriebspunkts gespeichert werden, und daß, wenn der Betriebspunkt des Verbrennungsmotors sich ändert, der für den neuen Betriebspunkt gespeicherte Wert der Korrekturgröße dem Sollwert überlagert wird.

2. Verfahren nach Anspruch 1, **dadurch gekennzeichnet, daß**, wenn sich der Verbrennungsmotor (6) in einem stationären Zustand befindet, die für den aktuellen Betriebspunkt des Verbrennungsmotors gespeicherten Werte der Korrekturgröße so adaptiert werden, daß sich der korrigierte Sollwert demjenigen Wert annähert, der zu einem Abgleich zwischen berechnetem Wert aus dem gemessenen Luftverhältnis und dem unkorrigierten Sollwert führt.

3. Verfahren nach Anspruch 1 oder 2, **dadurch gekennzeichnet, daß** in dem Speicherelement (54) Werte der Korrekturgröße für einzelne Betriebspunkte des Motors, als Stützstellen bezeichnet, gespeichert werden, und daß für Betriebspunkte, die keine Stützstellen sind, die Korrekturgröße durch Interpolation berechnet wird.

4. Verfahren nach einem der vorhergehenden Ansprüche, **dadurch gekennzeichnet, daß** für jede Stützstelle (61) eine Umgebung (62) definiert ist, und daß eine Stützstelle (61) dann adaptiert wird, wenn der Betriebspunkt sich in der Umgebung (62) befindet.

5. Verfahren nach Anspruch 4, **dadurch gekennzeichnet, daß** die Umgebungen (62) benachbarter Stützstellen (61) sich in Randzonen (63) überlappen, und daß, wenn der Betriebspunkt in einem Überlappungsbereich (63) zwischen zwei Stützstellen eintritt, diejenige Stützstelle, in dessen Umgebung (62) der Betriebspunkt neu eingetreten ist, nicht adaptiert wird, bevor der Betriebspunkt nicht die Umgebung der anderen Stützstelle verlassen hat.

6. Verfahren nach Anspruch 4, **dadurch gekennzeichnet, daß** die Umgebungen der Stützstellen jeweils durch Zonen getrennt sind, die keiner Umgebung angehören.

7. Verfahren nach einem der Ansprüche 3 bis 6, **dadurch gekennzeichnet, daß** der Gradient der Korrekturgröße überwacht wird, und daß Stützstellen, die einer gerade in Adaptierung befindlichen Stützstelle benachbart sind, in die gleiche Richtung wie diese adaptiert werden, wenn anderenfalls der Gradient der Korrekturgröße einen Grenzwert überschritte.

8. Verfahren nach einem der vorhergehenden Ansprüche, **dadurch gekennzeichnet, daß** ein stationärer Zustand des Motors dann angenommen wird, wenn eine oder mehrere der folgenden Bedingungen erfüllt ist:

   - das Tastverhältnis des Abgasrückführventils liegt innerhalb eines erlaubten Bereiches,
   - die Abgasrückführregelung ist freigegeben,
   - die Motordrehzahl ($n_{mot}$) liegt innerhalb eines erlaubten Bereiches,
   - die Einspritzmenge ($m_{E,soll}$) und/oder ihre zeitliche Änderung ($dm_{E,soll}/dt$) liegen innerhalb eines erlaubten Bereiches,
   - das gemessene Luftverhältnis ($\lambda$) und oder seine zeitliche Änderung ($d\lambda/dt$) liegen innerhalb eines erlaubten Bereiches.

9. Verfahren nach einem der vorhergehenden Ansprüche, **dadurch gekennzeichnet, daß** anhand des gemessenen Luftverhältnisses ($\lambda$) und der Einspritzsollmenge ($m_{E,soll}$) des Verbrennungsmotors eine Frischluftmasse ($m_{L,ber}$) berechnet wird, die zur Adaptierung der Korrekturgröße ($m_{L,korr}$) genutzt wird.

10. Verfahren nach einem der Ansprüche 1 bis 8, **dadurch gekennzeichnet, daß** anhand des Meßwertes des Luftverhältnisses ($\lambda$), einer im Ansaugtrakt der Brennkraftmaschine (6) gemessenen Frischluftmasse ($m_{L,ist}$) und der Motordrehzahl ($n_{mot}$) eine Frischluftmasse ($m_{L,ber}$) berechnet wird, die zur Adaptierung der Korrekturgröße ($m_{L,korr}$) genutzt wird.

11. Verfahren nach einem der Ansprüche 1 bis 8, **dadurch gekennzeichnet, daß** anhand des gemessenen Luftverhältnisses ($\lambda$) und der Motordrehzahl ($n_{Mot}$) des Verbrennungsmotors eine Frischluftmasse ($m_{L,ber}$) berechnet wird, die zur Adaptierung der Korrekturgröße ($m_{L,korr}$) genutzt wird.

12. Verfahren nach Anspruch 10 oder 11, **dadurch gekennzeichnet, daß** in die Berechnung der Frischluftmasse ($m_{L,ber}$) der aktuelle Wert der Korrekturgröße ($m_{L,korr}$) eingeht.

13. Verfahren nach einem der Ansprüche 1 bis 8, **dadurch gekennzeichnet, daß** anhand eines Sollwertes für die Frischluftmassenzufuhr ($m_{L,soll}$) und für die Einspritzsollmenge ($m_{E,soll}$) ein erwartetes Luftverhältnis ($\lambda_{soll}$) berechnet wird, und daß die Differenz zwischen dem berechneten ($\lambda_{soll}$) und dem gemessenen ($\lambda$) Luftverhältnis zur Adaptierung der Korrekturgröße genutzt wird.

14. Verfahren nach einem der Ansprüche 1 bis 8, **dadurch gekennzeichnet, daß** anhand eines Sollwertes für die Frischluftmassenzufuhr ($m_{L,soll}$), des Meßwertes des Luftverhältnisses ($\lambda$), der Korrekturgröße ($m_{L,korr}$) und der Motordrehzahl ($n_{mot}$) ein erwartetes Luftverhältnis ($\lambda_{soll}$) berechnet wird, und daß die Differenz zwischen dem berechneten ($\lambda_{soll}$) und dem gemessenen ($\lambda$) Luftverhältnis zur Adaptierung der Korrekturgröße genutzt wird.

15. Verfahren nach einem der Ansprüche 1 bis 8, **dadurch gekennzeichnet, daß** anhand des Sollwertes für die Frischluftmassenzufuhr ($m_{L,soll}$), der Korrekturgröße ($m_{L,korr}$) und der Motordrehzahl ($n_{mot}$) ein erwartetes Luftverhältnis ($\lambda_{soll}$) berechnet wird, und daß die Differenz zwischen berechneten ($\lambda_{soll}$) und dem gemessenen Luftverhältnis ($\lambda$) zur Adaptierung der Korrekturgröße genutzt wird.

16. Verfahren nach einem der vorhergehenden Ansprüche, **dadurch gekennzeichnet, daß** der Meßwert des Luftverhältnisses ($\lambda$) korrigiert wird, um Laufzeiten des Abgases auszugleichen.

17. Verfahren nach Anspruch 16, **dadurch gekennzeichnet, daß** ein zu erwartender Meßwert des Luftverhältnisses berechnet wird, und daß der zu erwartende Wert zu dem Meßwert ($\lambda$) hinzuaddiert und zeitverschoben subtrahiert wird.

18. Verfahren nach einem der vorhergehenden Ansprüche, **dadurch gekennzeichnet, daß** die Korrekturgröße eine Luftmasse, ein Luftverhältnis oder ein Äquivalenzverhältnis ist.

19. Vorrichtung zum Regeln des Luftverhältnisses eines Verbrennungsmotors mit Abgasrückführung, mit einem Luftregelkreis (41), der einen Steuereingang, einen Luftmassenmesser (2) im Ansaugtrakt des Verbrennungsmotors (6) und Stellmittel (16) zum Beeinflussen des Zustromes an Frischluft und rückgeführtem Abgas in den Verbrennungsmotor (6) umfaßt und den Zustrom so regelt, daß das Meßsignal des Luftmassensensors (2) einem am Steuereingang anliegenden Sollwertsignal angeglichen wird, einer Lambdasonde (44) zum Erfassen des Luftverhältnisses des Verbrennungsmotors (6), einem Speicherelement (45) für Sollwerte der Frischluftmassenzufuhr als Funktion von Betriebsparametern des Verbrennungsmotors, **gekennzeichnet durch** ein Kennfeld (55), das Werte einer Korrekturgröße als Funktion der Betriebsparameter enthält und einen aktuellen Wert der Korrekturgröße für die aktuellen Betriebsparameter liefert, Mittel zum Überlagern des am Steuereingang anliegenden Sollwertsignals mit dem aktuellen Wert der Korrekturgröße, und eine Steuerschaltung (52), die in einem stationären Zustand des Verbrennungsmotors mit einem gegebenen Betriebspunkt einen diesem Betriebspunkt zugeordneten Wert der Korrekturgröße in einem zweiten Speicherelement (54) derart variiert, daß das von der Lambdasonde (44) gemessene Luftverhältnis ($\lambda$) und das Luftverhältnis, das dem Sollwert der Frischluftmassenzufuhr für den gegebenen Betriebspunkt entspricht, sich einander angleichen.

20. Vorrichtung nach Anspruch 19, **dadurch gekennzeichnet, daß** die Steuerschaltung einen PI-Regler (53) oder einen Integralregler zum Variieren der Korrekturgröße umfaßt.

21. Vorrichtung nach Anspruch 19 oder 20, **dadurch gekennzeichnet, daß** das Kennfeld (55) das zweite Speicherelement (54), das Werte der Korrekturgröße für einzelne Betriebspunkte des Motors, als Stützstellen (61) bezeichnet, enthält, und eine Interpolationsschaltung, die für Betriebspunkte, die keine Stützstellen sind, die Korrekturgröße durch Interpolation berechnet, umfaßt.

22. Vorrichtung nach einem der Ansprüche 19 bis 21, **dadurch gekennzeichnet, daß** die Betriebsparameter die Soll-Einspritzmenge und die Motordrehzahl umfassen.

**Claims**

1. Method for regulating the air ratio of an internal combustion engine (6) with exhaust gas recirculation, in which a set value ($m_{L,set,\lambda set}$) which characterizes the mass supply of fresh air is predetermined as a function of the engine operating point, this set value is corrected by superimposing a correction variable obtained on the basis of measurements of the air ratio of the exhaust gas, and the corrected set value is used as an input variable for a regulating circuit (41) for the exhaust gas recirculation, **characterized in that** values for the correction variable are stored in a memory element (54) as a function of the operating point, and **in that**, if the operating point of the internal combustion engine changes, the value of the correction variable stored for the new operating point is superimposed on the set value.

2. Method according to Claim 1, **characterized in that**, when the internal combustion engine (6) is in a steady state, the values of the correction variable stored for the current operating point of the internal combustion engine are adapted in such a way that the corrected set value moves closer to the value which leads to matching between the calculated value from the measured air ratio and the uncorrected set value.

3. Method according to Claim 1 or 2, **characterized in that** values of the correction variable for individual operating points of the engine, referred to as supporting points, are stored in the memory element (54), and **in that** the correction variable for operating points which are not supporting points is calculated by interpolation.

4. Method according to one of the preceding claims, **characterized in that** a surrounding area (62) is defined for each supporting point (61), and **in that** a supporting point (61) is adapted when the operating point is in the surrounding area (62).

5. Method according to Claim 4, **characterized in that** the surrounding areas (62) of adjacent supporting points (61) overlap in boundary zones (63), and **in that** when the operating point enters an overlap region (63) between two supporting points, that supporting point whose surrounding area (62) the operating point has newly entered is not adapted before the operating point has left the surrounding area of the other supporting point.

6. Method according to Claim 4, **characterized in that** the surrounding areas of the supporting points are in each case separated by zones which do not belong to any surrounding area.

7. Method according to one of Claims 3 to 6, **characterized in that** the gradient of the correction variable is monitored, and **in that** supporting points which are adjacent to a supporting point which is currently being adapted are adapted in the same direction as this supporting point if the gradient of the correction variable would otherwise exceed a limit value.

8. Method according to one of the preceding claims, **characterized in that** a steady engine state is assumed if one or more of the following conditions are satisfied:

   - the duty factor of the exhaust gas recirculation valve is within a permitted range,
   - the exhaust gas recirculation control is enabled,
   - the engine speed ($n_{eng}$) is within a permitted range,

- the injection quantity ($m_{E,set}$) and/or its time change ($dm_{E,set}/dt$) are within a permitted range,
- the measured air ratio ($\lambda$) or its time change ($d\lambda/dt$) are within a permitted range.

**9.** Method according to one of the preceding claims, **characterized in that** a fresh air mass ($m_{L,calc}$) is calculated on the basis of the measured air ratio ($\lambda$) and the set injection quantity ($m_{E,set}$) of the internal combustion engine, and this fresh air mass is used to adapt the correction variable ($m_{L,corr}$).

**10.** Method according to one of Claims 1 to 8, **characterized in that** a fresh air mass ($m_{L,calc}$) is calculated on the basis of the measured value for the air ratio ($\lambda$), a fresh air mass ($m_{L,act}$) measured in the intake section of the internal combustion engine (6) and the engine speed ($n_{eng}$), and this fresh air mass is used to adapt the correction variable ($m_{L,corr}$).

**11.** Method according to one of Claims 1 to 8, **characterized in that** a fresh air mass ($m_{L,calc}$) is calculated on the basis of the measured air ratio ($\lambda$) and the engine speed ($m_{eng}$) of the internal combustion engine, and this fresh air mass is used to adapt the correction variable ($m_{L,corr}$).

**12.** Method according to Claim 10 or 11, **characterized in that** the current value of the correction variable ($m_{L,corr}$) is also taken into account in the calculation of the fresh air mass ($m_{L,calc}$).

**13.** Method according to one of Claims 1 to 8, **characterized in that** an expected air ratio ($\lambda_{set}$) is calculated on the basis of a set value for the mass supply of fresh air ($m_{L,set}$) and for the set injection quantity ($m_{E,set}$), and **in that** the difference between the calculated air ratio ($\lambda_{set}$) and the measured air ratio ($\lambda$) is used to adapt the correction variable.

**14.** Method according to one of Claims 1 to 8, **characterized in that** an expected air ratio ($\lambda_{set}$) is calculated on the basis of a set value for the mass supply of fresh air ($m_{L,set}$), the measured value for the air ratio ($\lambda$), the correction variable ($m_{L,corr}$) and the engine speed ($n_{eng}$), and **in that** the difference between the calculated air ratio ($\lambda_{set}$) and the measured air ratio ($\lambda$) is used to adapt the correction variable.

**15.** Method according to one of claims 1 to 8, **characterized in that** an expected air ratio ($\lambda_{set}$) is calculated on the basis of the set value for the mass supply of fresh air ($m_{L,set}$), the correction variable ($m_{L,corr}$) and the engine speed ($n_{eng}$), and **in that** the difference between the calculated air ratio ($\lambda_{set}$)

and the measured air ratio ($\lambda$) is used to adapt the correction variable.

**16.** Method according to one of the preceding claims, **characterized in that** the measured value of the air ratio ($\lambda$) is corrected in order to compensate for propagation times of the exhaust gas.

**17.** Method according to Claim 16, **characterized in that** an expected measured value for the air ratio is calculated, and **in that** the expected value is added to the measured value ($\lambda$) and subtracted in time-shifted fashion.

**18.** Method according to one of the preceding claims, **characterized in that** the correction variable is an air mass, an air ratio or an equivalence ratio.

**19.** Apparatus for regulating the air ratio of an internal combustion engine with exhaust gas recirculation, having an air regulating circuit (41), which comprises a control input, an air mass flow meter (2) in the intake section of the internal combustion engine (6) and actuating means (16) for influencing the incoming flow of fresh air and recirculated exhaust gas into the internal combustion engine (6) and controls the incoming flow in such a way that the measured signal from the air mass sensor (2) is matched to a set value signal present at the control input, a lambda sensor (44) for recording the air ratio of the internal combustion engine (6), a memory element (45) for storing set values for the mass supply of fresh air as a function of operating parameters of the internal combustion engine, **characterized by** a characteristic diagram (55) which includes values for a correction variable as a function of the operating parameters and supplies a current value of the correction variable for the current operating parameters, means for superimposing the current value of the correction variable on the set value signal present at the control input, and a control circuit (52), which in a steady state of the internal combustion engine with a given operating point, varies a value of the correction variable assigned to this operating point in a second memory element (54) in such a manner that the air ratio ($\lambda$) measured by the lambda sensor (44) and the air ratio which corresponds to the set value of the mass supply of fresh air for the given operating point are matched to one another.

**20.** Apparatus according to Claim 19, **characterized in that** the control circuit comprises a PI regulator (53) or an integral regulator for varying the correction variable.

**21.** Apparatus according to Claim 19 or 20, **characterized in that** the characteristic diagram (55) comprises the second memory element (54), which contains values for the correction variable for individual operating points of the engine, referred to as supporting points (61), and an interpolation circuit, which calculates the correction variable by interpolation for operating points which are not supporting points.

22. Apparatus according to one of Claims 19 to 21, **characterized in that** the operating parameters comprise the set injection quantity and the engine speed.

## Revendications

1. Procédé de régulation de la proportion d'air d'un moteur à combustion interne (6) avec recyclage des gaz d'échappement, avec lequel une valeur de consigne ($M_{L,soll}$, $\lambda_{soll}$) caractérisant l'arrivée de la masse d'air frais en fonction du point de fonctionnement du moteur est prédéfinie, cette valeur de consigne est corrigée en superposant une grandeur de correction obtenue à l'aide de mesures de la proportion d'air des gaz d'échappement et la valeur de consigne corrigée est utilisée comme grandeur d'entrée d'un circuit de régulation (41) pour le recyclage des gaz d'échappement, **caractérisé en ce que** des valeurs de la grandeur de correction sont enregistrées dans un élément mémoire (54) en fonction du point de fonctionnement et que, lorsque le point de fonctionnement du moteur à combustion interne change, la valeur de la grandeur de correction enregistrée pour le nouveau point de fonctionnement est superposée à la valeur de consigne.

2. Procédé selon la revendication 1, **caractérisé en ce que** lorsque le moteur à combustion interne (6) se trouve dans un état stationnaire, les valeurs de la grandeur de correction qui sont enregistrées pour le point de fonctionnement actuel du moteur à combustion interne sont adaptées de telle sorte que la valeur de consigne corrigée s'approche de la valeur qui donne lieu à un équilibrage entre la valeur calculée de la proportion d'air mesurée et la valeur de consigne non corrigée.

3. Procédé selon la revendication 1 ou 2, **caractérisé en ce que** dans l'élément mémoire (54) sont enregistrées des valeurs de la grandeur de correction pour des points de fonctionnement individuels du moteur, appelés des points d'appui, et que pour les points de fonctionnement qui ne sont pas des points d'appui, la grandeur de correction est calculée par interpolation.

4. Procédé selon l'une des revendications précédentes, **caractérisé en ce que** pour chaque point d'appui (61) est défini un environnement (62) et qu'un point d'appui (61) est adapté lorsque le point de fonctionnement se trouve dans l'environnement (62).

5. Procédé selon la revendication 4, **caractérisé en ce que** les environnements (62) de points d'appui voisins (61) se chevauchent dans des zones de bordure (63) et que, lorsque le point de fonctionnement pénètre dans une zone de chevauchement (63) entre deux points d'appui, le point d'appui dans l'environnement (62) duquel le point de fonctionnement vient de pénétrer n'est pas adapté tant que le point de fonctionnement n'a pas quitté l'environnement de l'autre point d'appui.

6. Procédé selon la revendication 4, **caractérisé en ce que** les environnements des points d'appui sont à chaque fois séparés par des zones qui ne font partie d'aucun environnement.

7. Procédé selon l'une des revendications 3 à 6, **caractérisé en ce que** le gradient de la grandeur de correction est surveillé et que les points d'appui qui sont voisins d'un point d'appui qui se trouve en cours d'adaptation sont adaptés dans la même direction que celui-ci lorsque, à défaut, le gradient de la grandeur de correction dépasserait une valeur limite.

8. Procédé selon l'une des revendications précédentes, **caractérisé en ce qu'**un état stationnaire du moteur est supposé lorsque l'une ou plusieurs des conditions suivantes sont satisfaites :

   - le rapport cyclique de la soupape de recyclage des gaz d'échappement se trouve dans une plage autorisée,
   - la régulation du recyclage des gaz d'échappement est libérée,
   - la vitesse de rotation du moteur ($n_{mot}$) se trouve dans une plage autorisée,
   - le volume injecté ($m_{E,soll}$) et/ou sa variation dans le temps ($dm_{E,soll}/dt$) se trouvent dans une plage autorisée,
   - la proportion d'air ($\lambda$) mesurée et/ou sa variation dans le temps ($d\lambda/dt$) se trouvent dans une plage autorisée.

9. Procédé selon l'une des revendications précédentes, **caractérisé en ce qu'**une masse d'air frais ($m_{L,ber}$) qui est utilisée pour l'adaptation de la grandeur de correction ($m_{L,korr}$) est calculée au moyen de la proportion d'air ($\lambda$) mesurée et du volume injecté de consigne ($m_{E,soll}$) du moteur à combustion interne.

10. Procédé selon l'une des revendications 1 à 8, **ca-**

**ractérisé en ce qu'**une masse d'air frais ($m_{L,ber}$) qui est utilisée pour l'adaptation de la grandeur de correction ($m_{L,korr}$) est calculée au moyen de la valeur mesurée de la proportion d'air ($\lambda$), d'une masse d'air frais ($m_{L,ist}$) mesurée dans le cycle d'admission du moteur à combustion interne (6) et de la vitesse de rotation du moteur ($n_{mot}$).

**11.** Procédé selon l'une des revendications 1 à 8, **caractérisé en ce qu'**une masse d'air frais ($m_{L,ber}$) qui est utilisée pour l'adaptation de la grandeur de correction ($m_{L,korr}$) est calculée au moyen de la proportion d'air ($\lambda$) mesurée et de la vitesse de rotation ($n_{mot}$) du moteur à combustion interne.

**12.** Procédé selon la revendication 10 ou 11, **caractérisé en ce que** la valeur actuelle de la grandeur de correction ($m_{L,korr}$) intervient dans le calcul de la masse d'air frais ($m_{L,ber}$).

**13.** Procédé selon l'une des revendications 1 à 8, **caractérisé en ce qu'**une proportion d'air attendue ($\lambda_{soll}$) est calculée au moyen d'une valeur de consigne de l'arrivée de la masse d'air frais ($m_{L,soll}$) et du volume injecté de consigne ($m_{E,soll}$) et que la différence entre la proportion d'air calculée ($\lambda_{soll}$) et mesurée ($\lambda$) est utilisée pour l'adaptation de la grandeur de correction.

**14.** Procédé selon l'une des revendications 1 à 8, **caractérisé en ce qu'**une proportion d'air attendue ($\lambda_{soll}$) est calculée au moyen d'une valeur de consigne de l'arrivée de la masse d'air frais ($m_{L,soll}$), de la valeur mesurée de la proportion d'air ($\lambda$), de la grandeur de correction ($m_{L,korr}$) et de la vitesse de rotation du moteur ($n_{mot}$) et que la différence entre la proportion d'air calculée ($\lambda_{soll}$) et mesurée ($\lambda$) est utilisée pour l'adaptation de la grandeur de correction.

**15.** Procédé selon l'une des revendications 1 à 8, **caractérisé en ce qu'**une proportion d'air attendue ($\lambda_{soll}$) est calculée au moyen d'une valeur de consigne de l'arrivée de la masse d'air frais ($M_{L,soll}$), de la grandeur de correction ($m_{L,korr}$) et de la vitesse de rotation du moteur ($n_{mot}$) et que la différence entre la proportion d'air calculée ($\lambda_{soll}$) et mesurée ($\lambda$) est utilisée pour l'adaptation de la grandeur de correction.

**16.** Procédé selon l'une des revendications précédentes, **caractérisé en ce que** la valeur mesurée de la proportion d'air ($\lambda$) est corrigée pour équilibrer les temps de transit des gaz d'échappement.

**17.** Procédé selon la revendication 16, **caractérisé en ce qu'**une valeur mesurée attendue de la proportion d'air est calculée et que la valeur attendue est additionnée à la valeur mesurée ($\lambda$) et lui est soustraite avec un décalage dans le temps.

**18.** Procédé selon l'une des revendications précédentes, **caractérisé en ce que** la grandeur de correction est une masse d'air, une proportion d'air ou un rapport équivalent.

**19.** Dispositif de régulation de la proportion d'air d'un moteur à combustion interne avec recyclage des gaz d'échappement, comprenant un circuit de régulation de l'air (41) qui comprend une entrée de commande, un dispositif de mesure de la masse d'air (2) dans le cycle d'admission du moteur à combustion interne (6) et des moyens de réglage (16) pour influencer le courant d'arrivée d'air frais et les gaz d'échappement recyclés dans le moteur à combustion interne (6) et régule le courant d'arrivée de telle sorte que le signal de mesure du capteur de masse d'air (2) est mis au même niveau qu'un signal de valeur de consigne appliqué à l'entrée de commande, une sonde lambda (44) pour détecter la proportion d'air du moteur à combustion interne (6), un élément mémoire (45) pour les valeurs de consigne de l'arrivée de masse d'air frais en fonction des paramètres de fonctionnement du moteur à combustion interne, **caractérisé par** un diagramme caractéristique (55) qui contient les valeurs d'une grandeur de correction en fonction des paramètres de fonctionnement et délivre une valeur actuelle de la grandeur de correction pour les paramètres de fonctionnement actuels, des moyens pour superposer le signal de valeur de consigne appliqué à l'entrée de commande à la valeur actuelle de la grandeur de correction et un circuit de commande (52) qui, dans un état stationnaire du moteur à combustion interne avec un point de fonctionnement donné, fait varier une valeur de la grandeur de correction associée à ce point de fonctionnement dans un deuxième élément mémoire (54) de telle sorte que la proportion d'air ($\lambda$) mesurée par la sonde lambda (44) et la proportion d'air qui correspond à la valeur de consigne de l'arrivée de masse d'air frais pour le point de fonctionnement donné s'équilibrent.

**20.** Dispositif selon la revendication 19, **caractérisé en ce que** le circuit de commande comprend un régulateur PI (53) ou un régulateur à intégrale pour faire varier la grandeur de correction.

**21.** Dispositif selon la revendication 19 ou 20, **caractérisé en ce que** le diagramme caractéristique (55) contient le deuxième élément mémoire (54), lequel définit en tant que points d'appui (61) les valeurs de la grandeur de correction pour les points de fonctionnement individuels du moteur, et comprend un circuit d'interpolation qui calcule la grandeur de correction par interpolation pour les points de fonctionnement qui ne sont pas des points d'appui.

**22.** Dispositif selon l'une des revendications 19 à 21, **caractérisé en ce que** les paramètres de fonctionnement comprennent le volume injecté de consigne et la vitesse de rotation du moteur.

Fig.1

Fig.2

Fig.3

Fig.4

Fig.5

$m_{E,soll}$ — 45

$m_{L,soll}$ — 53 — 51 — 54

$m_{L,korr}$

$n_{mot}$

Freigabe

Startpunkt

$m_{E,soll}$

$n_{mot}$

Freigabe

$TV_{AGR}$

AGR ein/aus

$n_{mot}$

$dm_{E,soll}/dt$

$m_{E,soll}$

$d\lambda/dt$

$\lambda$

52

55

$m_{L,korr}$ — 43 — 41 — 48

AGR-Hub — $m_{E,soll}$

6

2

Auswertung Luftmasse

$m_L$

$m_{L,korr}$  $m_{E,soll}$  $m_{L,ist}$  $m_{L,korr}$

46

$\lambda$

44

$O_2$ Abgas

a)

$m_{E,soll}$

46

$m_{L,ber}$

$\lambda$

b)

46

45

$m_{L,ber}$

$n_{mot}$

$m_{L,ist}$

$m_{E,ber}$

$\lambda$

$m_{L,korr}$

c)

46

45

$m_{L,ber}$

$n_{mot}$

$\lambda$

$m_{L,korr}$

Fig. 9

a)

$m_{L,soll}$

$m_{E,soll}$

111

$\lambda_{soll}$

b)

$m_{L,soll}$

111

$\lambda$

$m_{L,korr}$

$m_{E,ber}$

45

$n_{mot}$

$\lambda_{soll}$

c)

$m_{L,soll}$

111

$m_{L,korr}$

45

$n_{mot}$

$\lambda_{soll}$

Fig.12

Fig. 6

$m_{L,korr}$

64

61

63

62

$m_E$

$n_{mot}$

$n_{mot,st2}$

$n_{mot,st1}$

61

$m_{E,st2}$

$m_{E,st1}$

0

Leerlauf

Fig.7

Fig.8

$m_{E,soll}$  $m_{L,ist}$  $m_{L,korr}$

$m_{L,ber}$

46

λ

$m_{L,ist}$

$m_{L,korr}$

$m_{E,soll}$

102   101

## Fig.10

45

$m_{E,soll}$

111

$m_{L,soll}$

$m_{E,soll}$

λ

$m_{L,korr}$

51

54

43

48

AGR-Hub

$m_{E,soll}$

$n_{mot}$

$n_{mot}$

$m_{L,korr}$

Startpunkt

$m_{E,soll}$

6

2

53

Freigabe

55

$TV_{AGR}$

Freigabe

Auswert.
Luftmasse

$m_L$

$AGR_{ein/aus}$

$n_{mot}$

$dm_{E,soll}/dt$

$m_{E,soll}$

$d\lambda/dt$

λ

λ

$O_{2,Abgas}$

52

44

## Fig.11

20